# DEMANDE DE BREVET EUROPEEN

(11) **EP 2 760 030 A1**
(43) Date de publication de la demande: **30.07.2014**
(21) Numéro de dépôt: 14152671.5
(22) Date de dépôt: 27.01.2014
(51) Int. Cl.: H01B 3/28, H01B 3/04, H01B 3/44, H01B 3/46, H01B 7/02, H01B 7/29

(54) **Cable d'énergie et/ou de télécommunication comportant au moins une couche éléctriquement isolante**

(30) Priorité: 28.01.2013 FR 1350694
(71) Demandeur: Nexans, 75008 Paris (FR)
(72) Inventeur: Allais, Arnaud, 69400 LIMAS (FR); Mazel, Christelle, 38300 RUY (FR); Dardel, Boris, 2035 CORCELLES (CH); Seux, Thierry, 38550 SABLONS (FR)
(74) Mandataire: Gauer, Pierre

(57) **Abrégé**

Câble d'énergie et/ou de télécommunication comprenant au moins une couche (4) électriquement isolante qui comporte au moins deux bandes isolantes (61 à 64) superposées, chacune de ces bandes (61 à 64) étant disposée de façon à laisser un déjoint (71 à 74) entre deux de ses spires successives (81 à 84), caractérisé en ce que chaque bande (61 à 64) est disposée de façon décalée par rapport aux bandes (61 à 64) contigües de manière à ce que les déjoints (71 à 74) d'une bande (61 à 64) ne coïncident pas avec les déjoints (71 à 74) des bandes (61 à 64) contigües et soient recouverts entièrement par les spires (82 à 84) des bandes contigües (62 à 64). La couche isolante (4) comporte une substance diélectrique et résistante au feu qui se trouve au contact de chacune desdites bandes isolantes (61 à 64) et s'introduit dans lesdits déjoints (71 à 74).

## Description

La présente invention a pour objet un câble d'énergie et/ou de télécommunication comportant au moins une couche électriquement isolante. Elle s'applique notamment, mais non exclusivement, aux câbles moyenne tension destinés notamment à rester opérationnels pendant un temps défini lorsqu'ils sont soumis à des conditions extrêmes telles que des incendies. On sait que les câbles, qu'ils soient électriques ou optiques, destinés au transport d'énergie ou à la transmission de données, comprennent au moins un élément conducteur, électrique ou optique, entouré par au moins une couche isolante.

On sait également que les câbles moyenne ou haute tension comportent généralement de l'intérieur vers l'extérieur :
- un élément conducteur central réalisé généralement en cuivre ou en aluminium ;
- une couche semi-conductrice interne entourant ledit élément conducteur central et réalisée généralement en un matériau polymère électriquement conducteur ;
- une couche électriquement isolante entourant ladite couche semi-conductrice interne ;
- un écran de protection externe conducteur entourant ladite couche isolante et réalisé généralement en un matériau polymère électriquement conducteur ;
- une gaine entourant ledit écran de protection externe.

La couche électriquement isolante entourant l'élément conducteur ou disposée entre la couche semi-conductrice interne et l'écran de protection externe comporte généralement :
- une sous-couche de mica et une sous-couche de polyéthylène du type XLPE (« Cross-linked polyethylene ») ; ou
- une sous-couche de mica et une sous-couche d'élastomère de type EPR (« Ethylene Propylene Rubber ») ; ou
- un composé de silicone ou d'EPR.

Il s'avère toutefois que l'utilisation d'une sous-couche de mica et d'une sous-couche de XLPE confère au câble une faible stabilité mécanique en cas de flexion ou de pliure et provoque une absence de matière à des endroits déterminés qui peut engendrer des décharges électriques localisées en raison d'une augmentation de la valeur du champ électrique au niveau de ces espaces vides au-delà de la limite de rigidité diélectrique.

Il s'avère également qu'une isolation électrique à base de silicone présente une résistance au feu faible lorsque la silicone utilisée a de bonnes propriétés électriques, et de piètres performances électriques lorsque la silicone utilisée présente une bonne résistance au feu.

On sait également que lorsque la couche électriquement isolante d'un câble est réalisée par l'enroulement d'une bande d'un matériau isolant sur le corps du câble, un intervalle ou déjoint est généralement laissé entre deux spires successives d'une bande afin d'assurer une certaine flexibilité au câble. Cependant, la présence de ces déjoints présente notamment l'inconvénient de rendre le câble plus vulnérable auxdites décharges électriques localisées. La présente invention a notamment pour objet de remédier à ces inconvénients majeurs en proposant un câble d'énergie et/ou de télécommunication pouvant :
- être protégé contre lesdites décharges électriques ;
- présenter une bonne résistance au feu ; et
- présenter une bonne stabilité mécanique en cas de flexion de ce dernier.

A cet effet, elle propose un câble d'énergie et/ou de télécommunication comprenant au moins une couche électriquement isolante qui comporte au moins deux bandes isolantes superposées, caractérisé en ce que chaque bande est disposée de façon décalée par rapport aux bandes contigües de manière à ce que les jointures d'une bande ne coïncident pas avec les jointures des bandes contigües et soient recouvertes entièrement par les spires des bandes contigües, la couche isolante comporte un ou plusieurs éléments lui permettant d'être résistant au feu dont une substance diélectrique et résistante au feu au contact de chacune desdites bandes isolantes, chacune de ces bandes étant disposée de façon à laisser un déjoint entre deux de ses spires successives, chaque bande étant disposée de façon décalée par rapport aux bandes contigües de manière à ce que les déjoints d'une bande ne coïncident pas avec les déjoints des bandes contigües et soient recouverts entièrement par les spires des bandes contigües, la couche isolante comportant un ou plusieurs éléments lui permettant d'être résistant au feu dont une substance diélectrique et résistante au feu au contact de chacune desdites bandes isolantes et qui s'introduit dans lesdits déjoints de manière à combler lesdits déjoints.

Ainsi, chacun des déjoints d'une bande est recouvert totalement par la bande contigüe disposée sur cette dernière et est comblé par ladite substance diélectrique, ce qui permet avantageusement de protéger le câble contre les décharges électriques partielles.

D'une manière générale, la substance diélectrique peut combler tous les interstices pouvant se former entre les bandes.

De plus, cette disposition permet de conférer au câble une stabilité mécanique en cas de flexion ou de pliure.

La substance diélectrique qui peut être un liquide, une pâte ou un produit pouvant polymériser, est disposée préférentiellement entre deux bandes isolantes contigües.

La composition de la couche électriquement isolante permet de lui conférer de bonnes propriétés d'isolation électrique et thermique. A titre d'exemple, cette composition peut comprendre des éléments sous forme céramique et/ou de verre. Cependant, l'élément essentiel de la composition de la couche isolante est préférentiellement du mica qui présente le double avantage d'avoir de bonnes propriétés d'isolation électrique et de résistance au feu et à la chaleur.

La résistance au feu est définie comme étant la propriété permettant à un élément de conserver son intégrité électrique et plus généralement ses propriétés fonctionnelles pendant un temps défini, dans une situation d'incendie.

De manière préférentielle, la couche isolante est composée d'un ou de plusieurs éléments lui permettant d'être difficilement inflammable, ou non inflammable, et/ou incombustible.

Préférentiellement, les bandes isolantes sont composées d'une matière non poreuse lorsque la substance diélectrique n'est pas un liquide.

De manière préférentielle, la couche isolante comprend :
- un premier ensemble d'au moins deux bandes isolantes contigües enroulées en spirale autour du corps du câble, dans un premier sens, avec un premier pas d'enroulement ;
- un second ensemble d'au moins deux bandes isolantes contigües rubanées en spirale autour dudit premier ensemble, dans un second sens opposé au premier, avec un second pas d'enroulement.

De cette façon, cette structure permet avantageusement de stabiliser en torsion la couche isolante sur le corps du câble.

D'autres caractéristiques et avantages de la présente invention apparaîtront à la lumière des exemples qui vont suivre et des figures ci-annexées, lesdits exemples et figures étant donnés à titre illustratif et nullement limitatif.
La figure 1 est une représentation schématique selon une coupe transversale du câble selon l'invention.
La figure 2 est une représentation schématique de bandes isolantes superposées, composant la couche d'isolation d'un câble selon l'invention. Pour des raisons de clarté, seuls les éléments essentiels pour la compréhension de l'invention ont été représentés de manière schématique, et ceci sans respect de l'échelle.

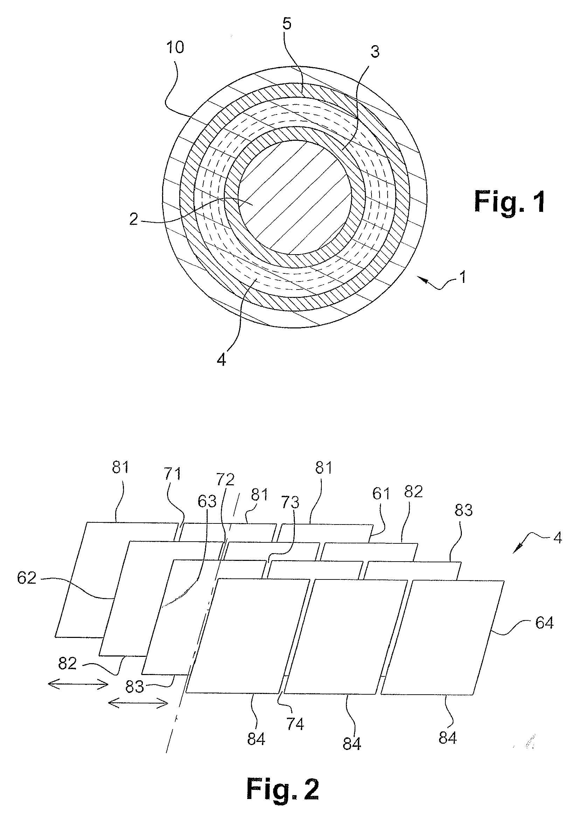

Le câble électrique 1 représenté selon une coupe transversale sur la figure 1 comporte notamment de l'intérieur vers l'extérieur :
- un élément conducteur central 2 ;
- une couche semi-conductrice interne 3 entourant ledit élément conducteur central 2 ;
- une couche électriquement isolante 4 entourant ladite couche semi-conductrice interne 3 ;
- un écran de protection externe conducteur 5 entourant ladite couche isolante 4 ;
- une gaine extérieure de protection 10 entourant l'écran de protection externe conducteur 5.

Selon un mode de réalisation préférentiel représenté schématiquement en figure 2, le câble 1 selon l'invention comporte une couche électriquement isolante 4 qui comprend plusieurs bandes isolantes 61 à 64 superposées, chacune de ces bandes 61 à 64 étant disposée de façon à laisser un déjoint 71 à 74 entre deux de ses spires successives 81 à 84. En outre, chaque bande 61 à 64 est disposée de façon décalée sur une bande 61 à 64 contigüe de manière à ce que les déjoints 71 à 74 d'une bande 61 à 64 ne coïncident pas avec les déjoints 71 à 74 des bandes contigües 61 à 64.

A titre d'exemple, tel que cela est représenté sur la figure 2, la couche isolante 4 comporte :
- une première bande isolante 61 appliquée sur la couche semi-conductrice interne 3 du câble 1, préférentiellement par rubanage, de façon à laisser un déjoint 71 entre deux spires successives 81 de cette première bande 61 ;
- une seconde bande isolante 62 appliquée sur la première bande isolante 61 de façon à laisser un déjoint 72 entre deux spires successives 82 de cette seconde bande 62, cette seconde bande 62 étant disposée de façon décalée sur la première bande 61 de manière à ce que les déjoints 71 de la première bande 61 ne coïncident pas avec les déjoints 72 de la seconde bande 62 et soient recouverts entièrement par les spires 82 de la bande 62 ;
- des bandes isolantes supplémentaires 63 et 64 appliquées de telle manière que :
   o ces bandes 63, 64 soient superposées ;
   o chacune de ces bandes 63, 64 soit disposée de façon à laisser un déjoint 73, 74 entre deux de ses spires successives 83, 84 ; et que
   o chaque bande 63, 64 soit disposée de façon décalée par rapport aux bandes contigües respectivement 62, 64 et 63, de manière à ce que les déjoints 72, 73, 74 d'une bande 62, 63, 64 ne coïncident pas avec les déjoints 72, 73, 74 des bandes contigües 62, 63, 64 et soient recouverts entièrement par les spires 83, 84 des bandes contigües 63, 64.

De façon préférentielle, chacune desdites bandes isolantes 61 à 64 est imprégnée d'un liquide ayant de bonnes propriétés diélectriques et de résistance au feu. Cette imprégnation des bandes 61 à 64 s'effectue de manière à ce que le liquide s'introduise dans les déjoints 71 à 74 de la couche isolante 4, ce qui permet avantageusement de les remplir totalement. A titre d'exemple non limitatif, ce liquide peut être composé d'une huile silicone bi-composant.

Préférentiellement, les bandes isolantes 61 à 64 sont imprégnées du liquide diélectrique, composé préférentiellement de silicone non ou partiellement réticulé, utilisé en une quantité suffisante pour permettre l'imprégnation des bandes isolantes 61 à 64 mais également de remplir les déjoints 71 à 74. Cette imprégnation s'effectue avant ou après que les bandes isolantes 61 à 64 aient été disposées sur le câble 1.

Selon une variante d'exécution de l'invention, cette imprégnation peut être effectuée en pulvérisant le liquide diélectrique sur les bandes isolantes 61 à 64 disposées au préalable dans une enceinte hermétique. Le liquide diélectrique est pulvérisé en une quantité suffisante pour permettre l'imprégnation des bandes isolantes 61 à 64 mais également de remplir les déjoints 71 à 74.

Selon une autre variante d'exécution de l'invention, l'imprégnation des bandes isolantes 61 à 64 s'effectue en les immergeant dans un bac comportant le liquide diélectrique. La quantité de liquide diélectrique imprégnant les bandes isolantes 61 à 64 est suffisante pour permettre l'imprégnation des bandes isolantes 61 à 64 mais également de remplir les déjoints 71 à 74.

Dans l'hypothèse où l'imprégnation s'effectue avant que les bandes isolantes 61 à 64 soient disposées sur le câble 1, le remplissage des déjoints 71 à 74 s'effectue sous l'effet de la pression exercée par la bande contigüe supérieure et/ou par celle de la couche du câble 1 supérieure et contigüe à la couche isolante 4.

Selon une variante d'exécution de l'invention, la substance diélectrique est une pâte ou une résine disposée préférentiellement avant la réalisation du processus de rubanage.

Selon une autre variante d'exécution de l'invention, la substance diélectrique est un produit polymérisé.

Préférentiellement, la couche isolante 4 comporte du mica qui présente l'avantage d'avoir des propriétés d'isolation électrique et thermique.

De manière préférentielle, au moins une bande isolante 61 à 64 est formée d'un ruban micacé pour l'isolation des câbles renforcé préférentiellement par au moins un ruban support (non représenté) qui lui confère la résistance à la traction nécessaire à un enrubannage correct. A titre d'exemple non limitatif, ce ruban support peut comporter des éléments de renfort tels que des fibres, des tissus de verre comprenant des brins élémentaires extrêmement fins tels que des silionnes, des films ou des feutres de polyester, ou un mélange de ces éléments, ces éléments étant agglomérés au moyen d'un liant spécial comprenant généralement un composé de silicone.

Selon une variante d'exécution de l'invention, la couche isolante 4 peut comporter une sous-couche comprenant plusieurs bandes isolantes 61 à 64 du type susdit qui entoure la couche semi-conductrice interne 3, ainsi qu'une sous-couche composée de XLPE ou d'EPR qui entoure la sous-couche comprenant plusieurs bandes isolantes 61 à 64.

Selon une autre variante d'exécution de l'invention, la couche isolante 4 peut comporter une sous-couche composée de XLPE ou d'EPR qui entoure la couche semi-conductrice interne 3, ainsi qu'une sous-couche comprenant plusieurs bandes isolantes 61 à 64 du type susdit qui entoure la sous-couche composée de XLPE ou d'EPR.

Préférentiellement, le câble 1 selon l'invention comporte une couche semi-conductrice externe (non représentée) disposée entre la couche isolante 4 et l'écran de protection externe conducteur 5.

De manière préférentielle, la couche isolante 4 comprend :
- un premier ensemble d'au moins deux bandes isolantes 61 à 64 contigües, présentant préférentiellement la même largeur, enroulées en spirale autour du corps du câble 1, dans un premier sens, avec un premier pas d'enroulement ;
- un second ensemble d'au moins deux bandes isolantes 61 à 64 contigües, présentant préférentiellement la même largeur, enroulées en spirale autour dudit premier ensemble, dans un second sens opposé au premier, avec un second pas d'enroulement.

## Revendications

1. Câble (1) d'énergie et/ou de télécommunication comprenant au moins une couche (4) électriquement isolante qui comporte au moins deux bandes isolantes (61 à 64) superposées,
**caractérisé en ce que** chaque bande (61 à 64) est disposée de façon décalée par rapport aux bandes (61 à 64) contigües de manière à ce que les jointures d'une bande (61 à 64) ne coïncident pas avec les jointures des bandes (61 à 64) contigües et soient recouvertes entièrement par les spires (82 à 84) des bandes contigües (62 à 64), la couche isolante (4) comporte un ou plusieurs éléments lui permettant d'être résistant au feu dont une substance diélectrique et résistante au feu au contact de chacune desdites bandes isolantes (61 à 64),
chacune de ces bandes (61 à 64) étant disposée de façon à laisser un déjoint (71 à 74) entre deux de ses spires successives (81 à 84), chaque bande (61 à 64) étant disposée de façon décalée par rapport aux bandes (61 à 64) contigües de manière à ce que les déjoints (71 à 74) d'une bande (61 à 64) ne coïncident pas avec les déjoints (71 à 74) des bandes (61 à 64) contigües et soient recouverts entièrement par les spires (82 à 84) des bandes contigües (62 à 64), la couche isolante (4) comportant un ou plusieurs éléments lui permettant d'être résistant au feu dont une substance diélectrique et résistante au feu au contact de chacune desdites bandes isolantes (61 à 64) et qui s'introduit dans lesdits déjoints (71 à 74) de manière à combler lesdits déjoints (71 à 74).

2. Câble (1) selon la revendication 1, **caractérisé en ce que** la substance diélectrique est disposée entre deux bandes isolantes contigües (61 à 64).

3. Câble (1) selon la revendication 1 ou 2, **caractérisé en ce que** la substance diélectrique est un liquide, une pâte ou un produit pouvant polymériser.

4. Câble (1) selon la revendication 3, **caractérisé en ce que** ledit liquide diélectrique est composé d'une huile silicone bi-composant.

5. Câble (1) selon l'une des revendications 1 à 3, **caractérisé en ce que** la substance diélectrique est une pâte.

6. Câble (1) selon l'une des revendications 1 à 3, **caractérisé en ce que** la substance diélectrique est un produit polymérisé.

7. Câble (1) selon l'une des revendications précédentes, **caractérisé en ce que** la couche isolante (4) comprend :
- un premier ensemble d'au moins deux bandes isolantes (61 à 64) contigües, enroulées en spirale autour du corps du câble (1), dans un premier sens, avec un premier pas d'enroulement ;
- un second ensemble d'au moins deux bandes isolantes (61 à 64) contigües, enroulées en spirale autour dudit premier ensemble, dans un second sens opposé au premier, avec un second pas d'enroulement.

8. Câble (1) selon l'une des revendications 1 à 7, **caractérisé en ce que** la couche isolante (4) comprend du mica.

9. Câble (1) selon la revendication 8, **caractérisé en ce qu'**au moins une bande isolante (61 à 64) est formée d'un ruban micacé renforcé par au moins un ruban support.

10. Câble (1) selon la revendication 9, **caractérisé en ce que** le ruban support comporte des éléments de renfort.

11. Câble (1) selon la revendication 10, **caractérisé en ce que** les éléments de renfort sont des fibres, des tissus de verre comprenant des brins élémentaires extrêmement fins tels que des silionnes, des films ou des feutres de polyester, ou un mélange de ces éléments.

12. Câble (1) selon l'une des revendications précédentes, **caractérisé en ce que** la couche isolante (4) comporte une sous-couche comprenant plusieurs bandes isolantes (61 à 64) qui entoure une couche semi-conductrice interne (3), ainsi qu'une sous-couche composée de XLPE (« Cross-linked polyethylene ») ou d'EPR (« Ethylene Propylene Rubber ») qui entoure la sous-couche comprenant plusieurs bandes isolantes (61 à 64).

13. Câble (1) selon l'une des revendications 1 à 11, **caractérisé en ce que** la couche isolante (4) comporte une sous-couche composée de XLPE ou d'EPR qui entoure une couche semi-conductrice interne (3), ainsi qu'une sous-couche comprenant plusieurs bandes isolantes (61 à 64) du type susdit qui entoure la sous-couche composée de XLPE ou d'EPR.
